# EUROPEAN PATENT SPECIFICATION

(11) **EP 0 925 559 B1**
(45) Date of publication and mention of the grant of the patent: **05.07.2006**
(21) Application number: 97935684.7
(22) Date of filing: 08.08.1997
(51) Int. Cl.: G07D 7/00

(54) **MAGNETIC READER**
MAGNETISCHES LESEGERÄT
LECTEUR MAGNETIQUE

(30) Priority: 23.08.1996 GB 9617692
(43) Date of publication of application: 30.06.1999
(73) Proprietor: THE GOVERNOR AND COMPANY OF THE BANK OF ENGLAND, London EC2R 8AH (GB)
(72) Inventor: CHORLEY, Brian, Buckhurst Hill, Essex IG9 5NF (GB); WEBB, Martin John, Thornwood Common, Essex CM16 6LR (GB); WHEELWRIGHT, Terry, Chelmsford CM1 4UR (GB)
(74) Representative: Nash, Keith Wilfrid
(86) International application number: PCT/GB1997/002151
(87) International publication number: WO 1998/008196

(56) References cited:
- EP-A- 0 413 534
- EP-A- 0 512 925
- WO-A-90/07165
- GB-A- 2 098 768
- US-A- 5 014 857
- US-A- 5 358 088

## Description

### Field of Invention

This invention relates to a reader for checking magnetically coded security threads which are incorporated within sheet material from which bank notes or other security documents are to be formed.

### Background to the Invention

Security threads of this kind, as disclosed for example in European Patent EP-B-0407550, typically comprise a succession of bit lengths, typically 2mm long. The bit lengths may represent a coded pattern by exhibiting different, respective magnetic characteristics for signal values in the coded pattern. For example, if the pattern is binary, the two binary signal values (1 and 0) may be represented respectively by a bit length of magnetic material and a bit length from which magnetic material is absent, so that in practice the thread comprises a succession of runs of magnetic material separated by spaces, the runs and spaces having lengths equal to integral numbers of bit lengths.

Various forms of reader for such magnetically coded security threads are known, but hitherto such devices have been directed to the reading of thread in a security document such as a bank-note. The device accepts bank notes, traverses the notes past a magnetic reading head and by means of various forms of signal processing circuits, decodes the magnetic pattern with great accuracy. Readers of this kind are known, for example, from EP-B-0493438.

GB-A-2098768 discloses a reader for checking a magnetically encoded thread incorporated into a security document. The reader comprises a magnetic reading head along which the security thread passes with relative longitudinal movement and causes electrical signals to be generated in the head.

There exists however a need for, and it is an object of the invention to provide, a reader which can be used to obtain a rapid check of the presence, continuity and magnetic code of thread incorporated in sheet material, before it is printed, and cut up to form bank notes or other documents. Such a reader can then be used in quality control of such sheet material to ensure that the quality of the printed code is to the designed standard, and that the thread has not been damaged in the foregoing production processes.

### Summary of the Invention

According to one aspect of the present invention there is provided a reader for checking magnetically encoded security thread incorporated or to be incorporated into sheet material comprising a housing which includes a magnetic reading head, a rotary member which is rotatable by engagement either with a surface of the thread or of sheet material containing the thread to be checked or of a surface adjacent thereto, whereby the security thread passes the reading head with relative longitudinal movement and causes first electrical signals to be generated by the reading head, and an encoder coupled to the rotary member, for providing second electrical signals indicating units of the relative movement between the housing and the surface, in synchronism with the first electrical signals from the reading head, wherein the housing is portable and is adapted for manual movement over the thread or the surface of the sheet material to effect the said relative movement.

The housing may be incorporated in a stationary reading device and means provided to move the thread or the thread containing sheet material relative thereto.

In a preferred form of the invention the housing is portable and is adapted for manual movement over the thread or the surface of the sheet material to effect the said relative movement.

To this end the housing may be adapted to be pushed in a forward direction, whilst maintaining slight downward pressure to maintain frictional engagement between the rotary member and the said surface. Such a reader, may in physical form generally resemble a hand-held scanner such as is used with computers. Moving such a device along a thread or over sheet material containing a security thread, can generate signals in the magnetic reading head.

However the relative movement is achieved, the reader may further comprise circuit means responsive to electrical signals from the magnetic reading head to decode same and provide signals indicative of the magnetic pattern detected by the magnetic reading head.

Typically the reader further comprises data storage means and comparison means, whereby decoded signals from the decoder can be compared with signals obtained from the storage means, for generating an output signal indicative of the results of the comparison.

The reader preferably comprises a magneto-resistive transducer and a permanent magnet for magnetising.magnetic segments along the length of the thread to render them readable by the magneto-resistive transducer.

The housing preferably includes an alignment device such as an index line on a transparent plate which is adapted to be disposed close to the thread, when the housing is positioned thereover for movement relative thereto, the index line serving to indicate the line of movement which the body needs to follow for the reader to follow, and to remain in alignment with the thread.

The rotary member may be a roller, or wheel, or pair of wheels, mounted on an axle for rotating a disc carried thereon which cooperates with a stationary sensor to form a shaft encoder.

The disc and wheel may be mounted on the same shaft as the rotary member or may be driven by a gear train or drive band.

A reader as aforesaid typically further comprises first signal processing circuit means responsive to signals from the shaft encoder to generate electrical signals indicative of the relative movement between the reader and the thread or the sheet material containing the thread.

Second circuit means may be provided responsive to the signals from the magnetic reading head, to allow the length of each detected magnetic segment in the thread, to be determined.

The reader may be powered by a battery which may be rechargeable.

The housing may include an LCD display mounted so as to be visible through window in the housing and third circuit means comprising an LCD driver for producing in the LCD, alphameric characters indicative of the length of a detected thread segment.

One or more LED's, with one or more LED drivers, may be provided with circuit means adapted to cause the LED's to illuminate depending on the results of a comparison of a detected thread segment length with stored data.

A preferred embodiment of reader further comprises an ADC to convert analogue signals from the reading head into digital signals, a memory in which to store a signal comparison algorithm, a further memory in which to store digital data relating to lengths and spacings of a known pattern of magnetic thread segments, means for delivering digital signals derived from relative movement between the thread and the reader head to a microprocessor operating in accordance with the said comparison algorithm to compare the stored digital data with the digital signals arising from the said relative movement and relating to the lengths of, and spacings between, the detected thread segments, to produce an output signal indicative of the result of the comparison.

The shaft encoder may be adapted to deliver pulses indicative of rotational movement of the rotary member.

Where the rotational movement is proportional to the linear movement of the device along the thread of sheet material containing the thread, the rotation can be equated to the length of the thread inspected.

Each short length of magnetic material making up the thread may be constructed to comprise a whole number multiple of unit lengths long, and the length of each gap between two elements of magnetic material may be constructed likewise to be a whole number multiple of the same said unit length.

The decoding of the magnetic elements and gaps may comprise allocating a number of units of length to each detected magnetic element or gap, which is a whole number equal to or greater than 1.

Timing pulses may be generated by the relative movement of the housing and the threads at a rate of N pulses per unit length along the thread and each magnetic segment being represented by a burst of M timing pulses, where M = N x L where L = the whole number of units lengths making up the segment.

The microprocessor may be adapted to determine from the signals available the overall length of a length of thread inspected, and to determine from the digital signals the number of unit lengths making up the scanned thread length, so as to be able to compute a mean value for the unit length of the detected thread.

In this event, the mean unit length (computed from the scarined length) may be compared with stored data relating to the true unit length, for the thread, to determine if the scanned thread has suffered stretch or is otherwise not within the specification for the thread.

According to another aspect of the invention there is provided a method of checking a magnetically encoded security thread before or after it is embedded in sheet material such as paper, comprising the steps of providing a reader including a portable housing with a magnetic reading head and a rotary member coupled to an encoder, manually moving the housing longitudinally either over a surface of the thread or of sheet material containing the thread to be checked or of a surface adjacent thereto, with the rotary member in engagement therewith, generating a first electrical signal in the reading head as magnetic regions of the thread move past the reading head, and generating a second electrical signal in the encoder in synchronism with the first signal to indicate units of relative movement between the housing and the surface.

### Description of the Drawings

The invention will now be described by way of example, with reference to the accompanying drawings, in which:
Figure 1 is a side sectional view of a hand-held thread tester according to the invention;
Figure 2 is a rear end view of the tester;
Figure 3 is a underneath view of the tester;
Figure 4 is a schematic diagram of the processing electronics for the tester;
Figure 5 is a further schematic diagram showing the overall signal processing system of a thread tester constructed in accordance with the invention;
Figure 6 is a schematic circuit diagram of a single track magneto-resistive read head showing the principle of operation;
Figure 7 is a further schematic diagram illustrating the principle of operation of the circuit used for determining the length of the individual magnetic segments of thread;
Figures 8A, 8B, 8C and 8D make up the complete circuit of the signal processing apparatus illustrated schematically in the earlier figures.

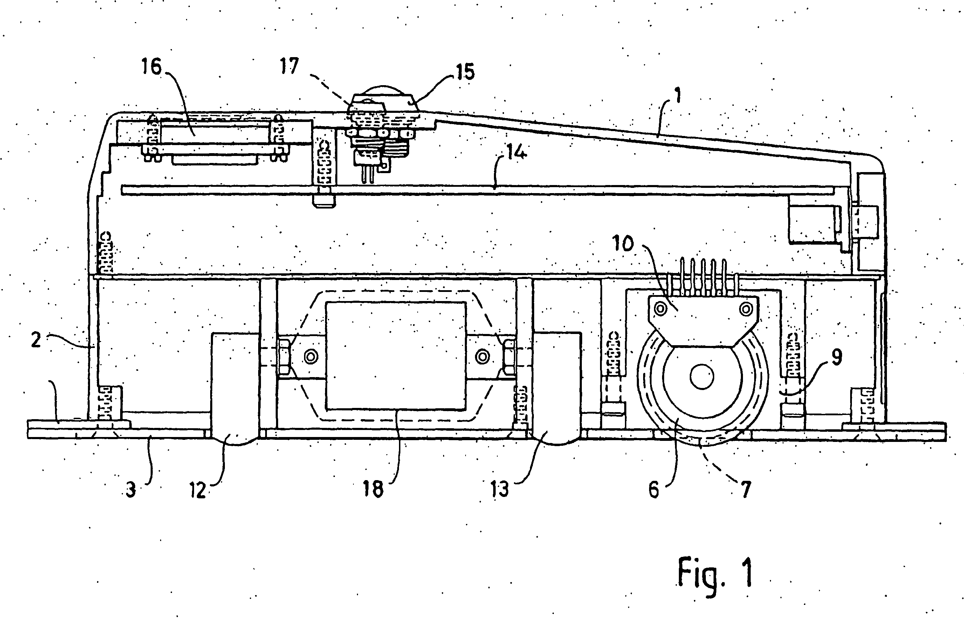

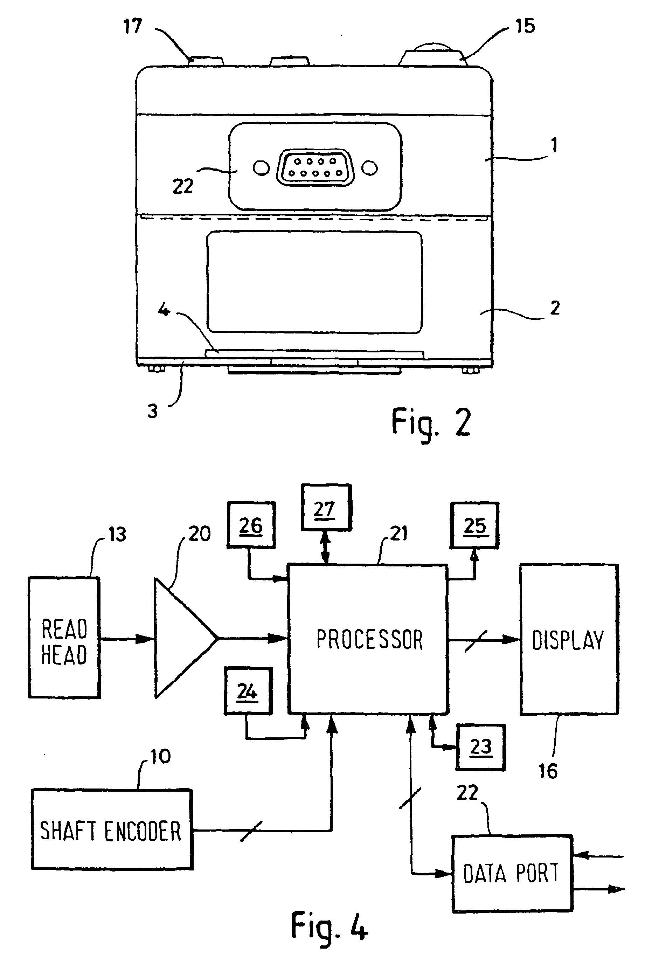

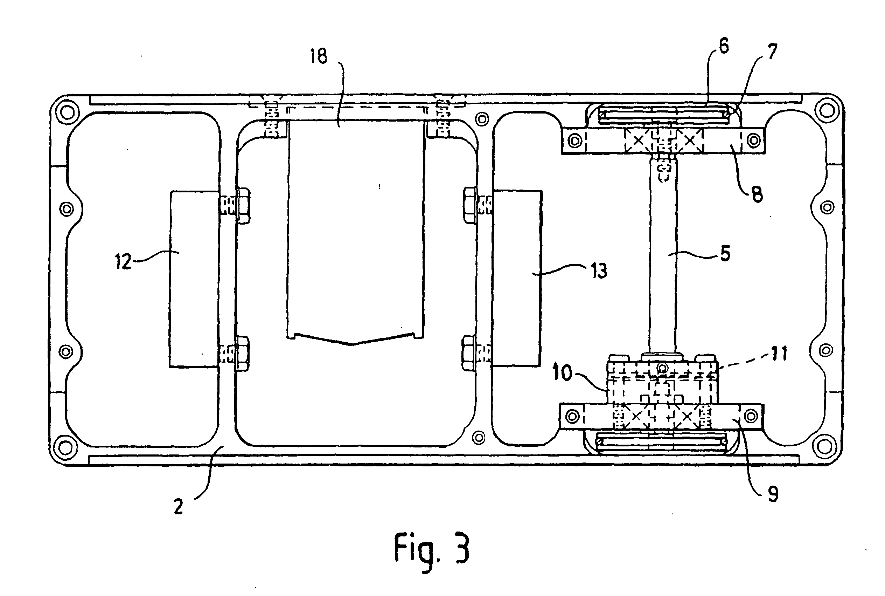

Figures 1 to 3 illustrate the construction of a thread tester embodying the invention. The housing comprises an upper part 1, a lower part 2 constituting a side wall, and an apertured base plate 3. At each end the base plate has a slot over which extends a transparent index plate 4 carrying a fore-and-aft index line, by the aid of which the tester may be aligned with a magnetic thread in a sheet of material to be checked.

To the rear of the housing is mounted a transverse rotatable shaft 5 housing wheels at each end, one of which is denoted as 6. Each wheel is fitted with an elastomeric tyre 7 in a peripheral groove. The wheels protrude through apertures in the base plate 3 so that they will be rotated if the device is manually pushed over a sheet of material while slight downward pressure is maintained. The shaft 5, is mounted in two bearing plates 8 and 9, one at each side of the housing. The elastomeric material is selected so as to be compressible by firm downward pressure, so that the edges of the grooved wheels make contact with the sheet material as the device is pushed forwardly thereover.

The crushed elastomeric material of the tyre 7 increases the frictional drive between the surface and the wheels, and also tends to resist lateral movement of the device, thereby assisting in keeping a straight line course along a thread.

The shaft 5 also carries a rotary disk 11 which cooperates with a fixed sensor 10 to constitute a shaft encoder to provide in known manner, electrical pulses indicating increments of movement of the shaft, which are proportional to forward movement of the device. The scaling of the increments is chosen in accordance with the resolution or bit length of the magnetically coded thread which the device is to be used to investigate. Typically the bit length of the thread is 2mm. The device therefore needs to relate transitions in the magnetic coding of the thread to distance moved to an accuracy of a tenth of a millimetre.

Since the thread is normally formed from material which is magnetic but which does not normally retain high levels of magnetism, the thread needs to be magnetically saturated before it is to be sensed. To this end, on a partition wall within the body is mounted a permanent magnet 12, although this could be an electromagnet, if preferred.

To the rear of the magnet 12 is a magneto-resistive sensor 13, which forms a thread reading head.

Other forms of magnetic reading head may be employed, but the advantage of a magneto-resistive head is that variable and low relative velocity can be tolerated between such a reading head and the thread.

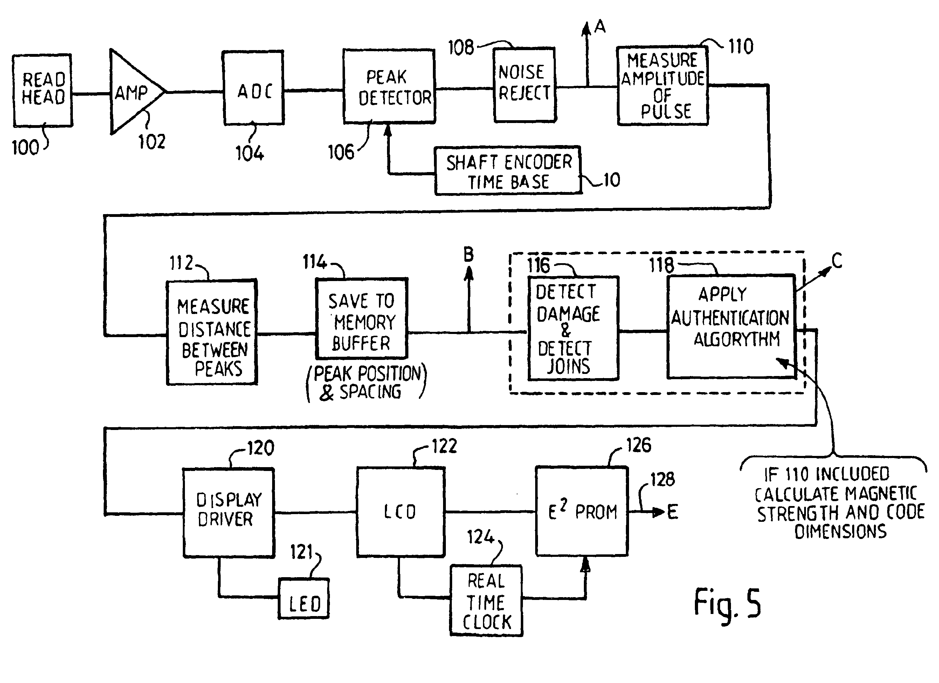

Signal processing circuits, (described in more detail with reference to Figure 4), are mounted on a printed circuit board 13. The upper housing part 1 accommodates an operating switch constituted by a push button 15, a liquid-crystal display 16 and an indicator lamp 17, which operates in response to the results of the signal processing. Within the housing, between partition walls that support the magnetic reading head, is a holder 18 for a battery for powering the encoder 10 and the processing circuits.

Figure 4 illustrates schematically the electronic circuits, by which the magnetic transitions in the coded thread are related to distance moved along the thread. Several operating modes are possible. For example, since the distances between successive boundaries of magnetic segments in a code of the kind described in EP-B-0407550 denote number of bits of the same binary value, the measurement of distance moved along a track between the occurrences of magnetic transitions sensed by the read head 13 enables a reproduction of the code in the thread. The code may be compared with a code provided to and stored in the reader so that the latter may determine whether the thread in the sheet material under investigation is correct, damaged, correct but being traversed in the wrong direction, etc..

The magnetically sensitive resistive element(s) is/are preferably constructed so as to form part of a resistive bridge circuit, the varying resistance thereof controlling the current flowing in the input circuit of a signal amplifier and signal shaping circuit.

The beginning and ending of a magnetic element in a thread will produce oppositely directed pulses (positive at the one end and negative at the opposite end of a N-S polarised element in the thread). The processor is programmed to identify peaks of either polarity and to generate "element start" and "element end" signals accordingly, which in combination with the encoder pulses can be used to determine the length of the element, and the magnetic polarity N-S or S-N. The element length can be decoded to binary 1's and the gaps can be decoded to binary 0's, using the knowledge of the unit length used in assembly the magnetic elements and gaps which form the thread.

The peak value of each pulse can be utilised to identify the magnetic flux density attributable to the element concerned, and this can be compared with stored data indicative of the expected magnetic flux density. If too low, an "out of specification" signal can be generated to indicate that the detected thread is not up to specification. A memory 23 is provided for storing such data.

The read head 13 is coupled by way of an amplifier 20, which may include a preamplifier. Temperature compensation elements may be provided in the magneto resistive head. The processor 21 may include memory means for data storage, or a separate memory may be provided.

The shaft encoder 10 provides signals denoting increments of movement, which are counted to enable thread length to be determined.

The processed signal can be fed out through a data port 22 for example to a PC, and data (such as a thread code) may be entered via the data port for storage and use during testing

Thus the entered signals may represent the code that should be present on the thread, and accordingly the display 16 can indicate, in response to a comparison between the entered code data (which may also be stored in 23) and the data derived from the code that is read from the thread, whether there is correspondence between the two. Other data may be displayed such as the date and time (for which purpose a time/date generator may be included in the circuit of Figure 4).

The processor may also generate a sample number, beginning with 0001.

The body may include a printer (not shown) which is driven by signals from the processor and memory devices, for printing characters on the sheet containing the thread (or on a separate sheet of paper which may then be affixed to the sheet containing the thread). The printed characters may comprise the time and date and scan/sample number, and may also comprise an indication of the results of the scan.

Figures 5 onwards show in more detail the construction of a magnetic reader operable as a device for checking magnetically coded security thread such as incorporated in bank notes or other security documents. The sensing device is a magneto-resistance reading head 100 such as is described in UK Patent specification No. 2202635, signals from which are amplified by an amplifier 102. The analogue signals are converted to digital signals by an ADC circuit 104 and the digital signals are supplied to a peak detector 106 which operates using a timebase derived from the shaft encoder 10 of Figures 1 to 4.

Noise rejection is achieved by eliminating isolated low amplitude peaks using a noise rejection circuit 108, the output of which can be supplied to two mean value determining circuits. The first circuit 110 comprises an amplitude measuring circuit for determining the mean amplitude of each peak. This circuit is optional since the peak values are only loosely linked to the magnetic strength of the thread, and whereas a check on this parameter of the thread may be desirable, it is not appropriate as a first order check of the validity.

A more important measure is the mean distance between detected peaks (after noise has been removed by 108), and the circuit for performing this measurement is shown at 112. The mean distance between peaks is determined and saved in a memory buffer 114. Essentially the information that is stored is the position and spacing of each identified peak. This circuit 114 provides an output which can be recorded, or displayed in the form of numerical values, or used to simulate lengths of thread with appropriate spaces therebetween in a graphical display.

A further optional circuit is provided in the form of a break detector at 116. Such breaks can occur due to minor damage or where one length of thread abuts the next at a join. This device is arranged to detect small breaks in lengths of thread which otherwise would represent a whole number of unit lengths. If such a break is detected the gap is "filled-in" electrically; before the data is applied to the next circuit 118 which applies an algorithm for checking and authenticating the thread data. The authentication circuit 118 computes the length dimension of each detected thread component (after damage and join errors have been removed by circuit 116, if used) and combines this with the strength of the magnetic field associated with each detected thread component if this information is available from circuit 110.

Data relating to thread lengths (and magnetic strength if available) is supplied to display driver 120 for indicating via LCD's such as 121 whether or not an overall length of thread which has been checked has been authenticated or not, as by illuminating a green or red LED for example. The driver 120 also allows this information and other data for example for generating words and numerals to be supplied to an LCD display panel 122 for displaying either in numerical and/or graphical format information about the inspected length of thread.

A real time clock 124 provides refresh signals to the LCD and also to a programmable read only memory 126 to which information from the memory 114 is supplied. A final output is available at 128, for supplying digital data to a remote computer.

The memory 126 can be read using a docking station or other device for transferring data from the first unit to a computer memory so that for example data relating to a particular batch of thread can be accumulated and stored and conveyed with the thread to allow downstream checks to be made for quality and/or production control.

The circuit shown in Figure 5 together with a suitable power supply can be mounted within a portable device such as described with reference to Figures 1 to 4, and the docking station may provide for recharging the power supply in the hand-held device.

Alternatively the relevant parts of the circuit of Figure 5 to form a reading head and signal delivery device, can be mounted in a housing located on a thread forming machine, for inspecting thread as it is manufactured. Signals from the reading head can be supplied to a second unit containing the remainder of the Figure 5 circuit together with power supplies and if necessary a master memory and a processor so that data obtained during manufacture can be transferred either by data carrier disc or tape, together with bobbins on which the lengths of thread are wound, for future use.

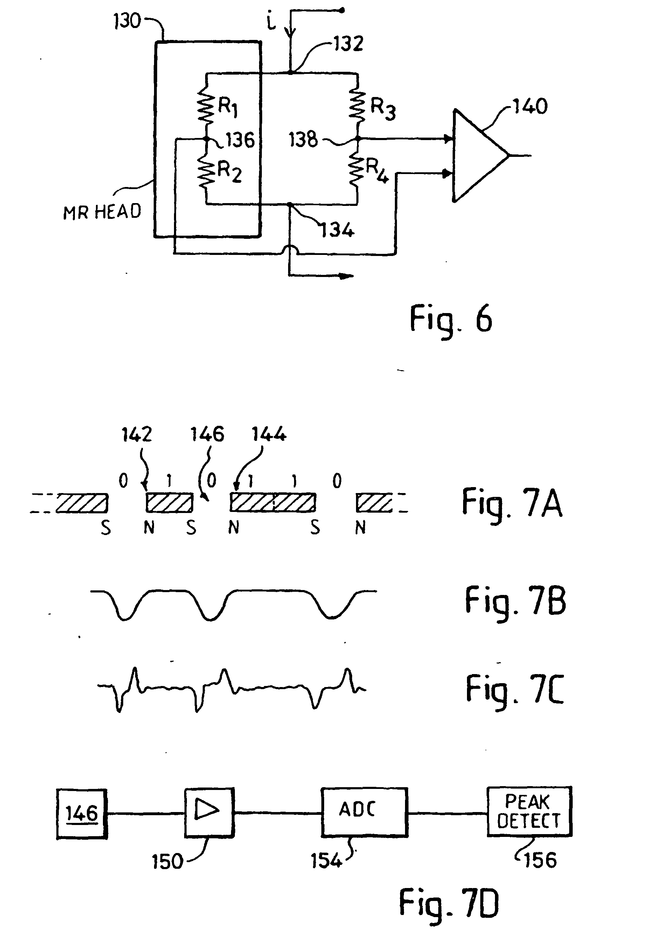

Figure 6 shows the equivalent circuit for a magneto-resistive head constructed along the lines of the magnetic detector described in UK Patent specification No. 2202635. Two resistive elements R1 and R2 are carried by a substrate 130 and are formed from a magneto-resistive material, i.e. one whose resistance varies depending on the strength of the magnetic field in which it is located.

A bridge circuit is formed by means of matching resistors R3 and R4 and a current i flows between junction 132 and junction 134 when the bridge is connected to a suitable source of EMF. The voltage between the opposite points of the bridge 136 and 138, is sensed by an amplifier 140.

Typically the nominal resistance of each of R1, R2 is the same, and likewise R3 and R4 are the same, although it is not necessary for the resistance of R1 to equal the resistance of R3 (or R2 that of R4) .

Although R1 and R2 are both on the same substrate 130, R2 is located at right angles to the resistive element R1 so that it will not be effected by any magnetic field components which affect the resistance of R1. However because of its close proximity to R1, any temperature change which could affect R₁ will also affect R2 in the same way, so that temperature changes alone will therefore not substantially alter the balance of the bridge.

Resistors R3 and R4 may also be on the substrate 130 but are not magneto-resistive. They are arranged so that any temperature fluctuations equally affect both R3 and R4, so as again to render the balance condition of the bridge to be independent of temperature.

Figure 7A shows segments of magnetic thread spaced apart along a line. A first segment 142 is separated from a second longer segment 144 by a gap 146. If the length of the gap is the same as the length of the segment 142 and if segment 144 is twice the length of segment 142, then the segment 142 can be said to correspond to a single logic 1, the gap to a single logic O and the segment 144 to a pair of logic 1's. The segments can therefore be likened to a code 1011.

If a single space exists before 142 and a single space after 144 ahead of any further segments, the code represented by the end spaces as well as to the two segments can be written as 010110.

Figure 7D shows a simplified circuit of a detector for detecting the segments. This comprises a detector 146 whose electrical response changes in the presence of a magnetic field (such as exists close to a segment such as 142 or 144) so as to produce amplitude excursions in an electrical parameter such as shown by the trace 148 in Figure 7B. Differentiating amplifier 150 generates from leading and trailing edges of the amplitude excursions such as 148, edge defining pulses such as 152 shown in Figure 7C. The time at which the maximum of each edge pulse 152 occurs is determined by regularly sampling the analogue output of amplifier 158 at high speed, and generating a digital value for each sample point, and noting local peak digital values. To this end 158 output is supplied to an ADC 154 and the output of the latter is supplied to a peak value detector 156.

By relating the time between peak values to a time base which is proportional to the relative movement between the detector and the length of thread containing the magnetic segments 142, 144 etc, so the length of each segment can be determined.

In the same way the gaps between segments can also be measured.

Since the divergence of the numerical value from 154 will in fact occur in opposite senses at the beginning and ending of the segments, the latter can be distinguished from the gaps in that a segment will begin with increasing values towards the peak and end with decreasing values towards a peak, whereas a gap between segments will begin with a decreasing value and end with an increasing value.

The length of any individual segment is of less importance than the overall length of a number of segments and the latter is easier to measure. Where a length of thread has a repeat pattern of segments and gaps (as will be the case in a security thread), it is possible to check whether or not a thread has become stretched or is damaged by measuring the overall length of a number of similar groups of segments and checking the overall length against a known length value.

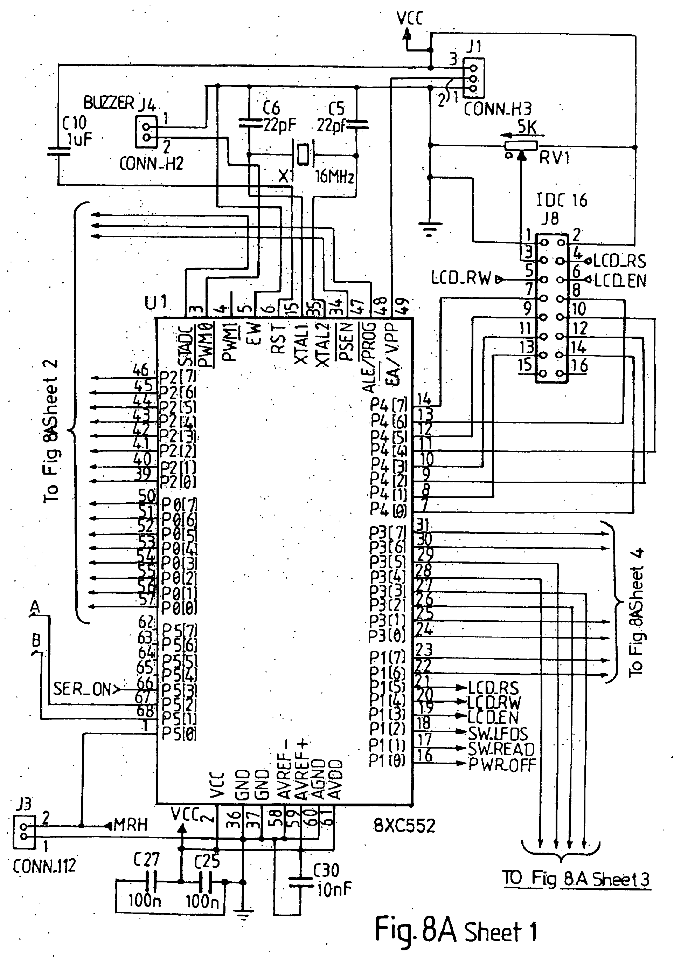

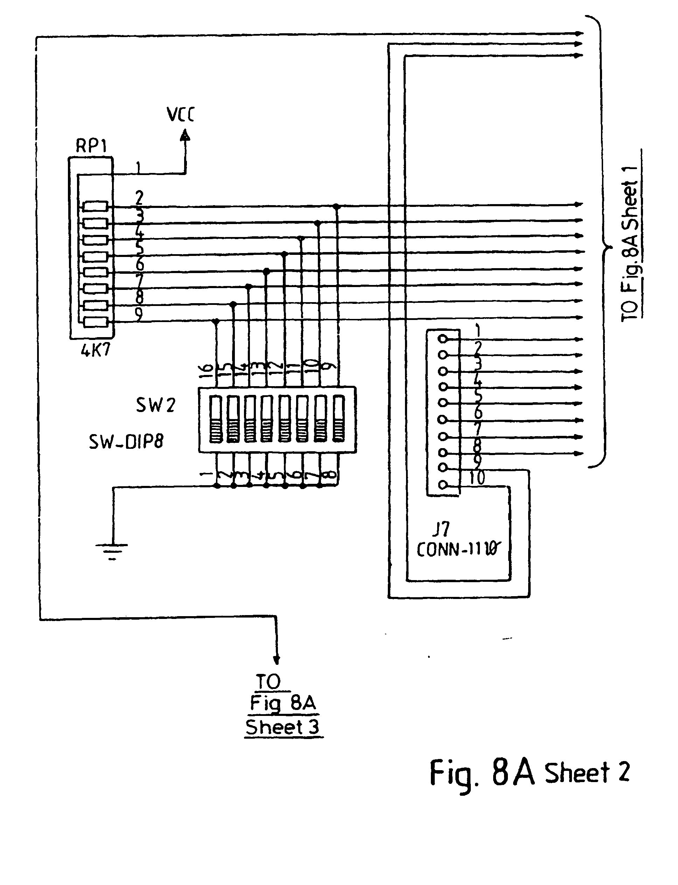

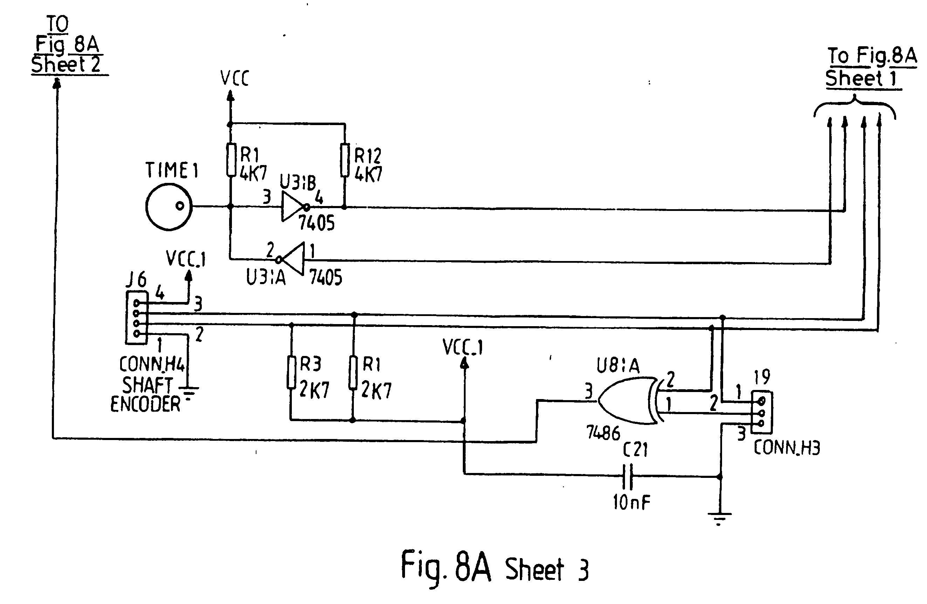

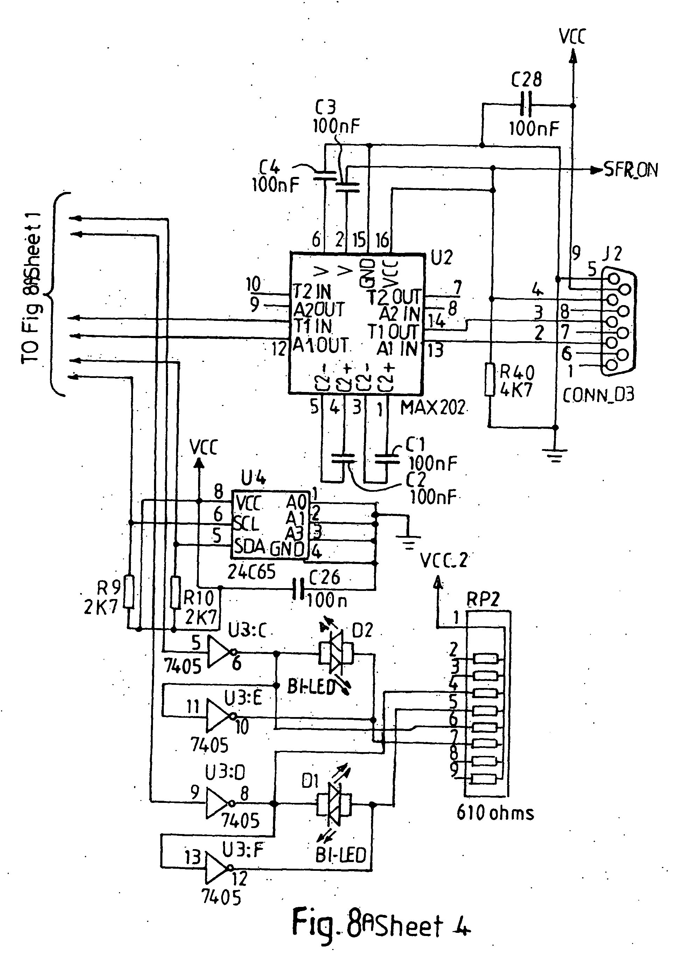

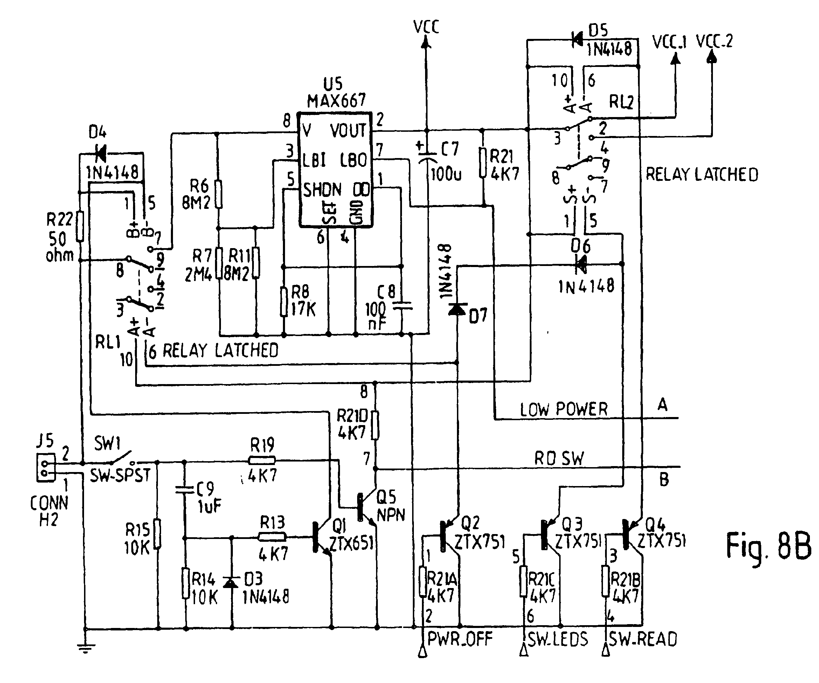

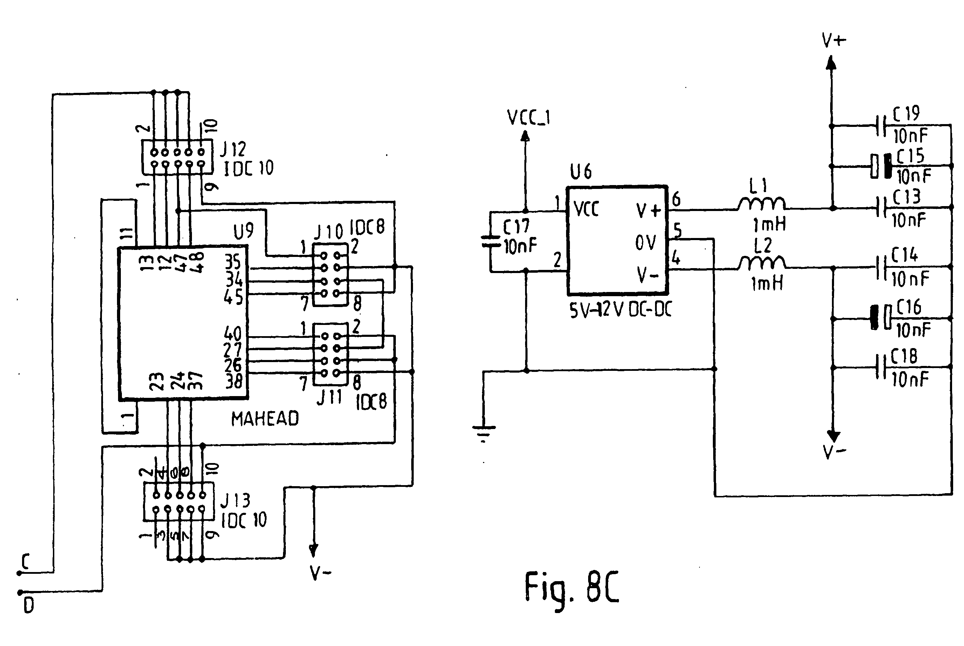

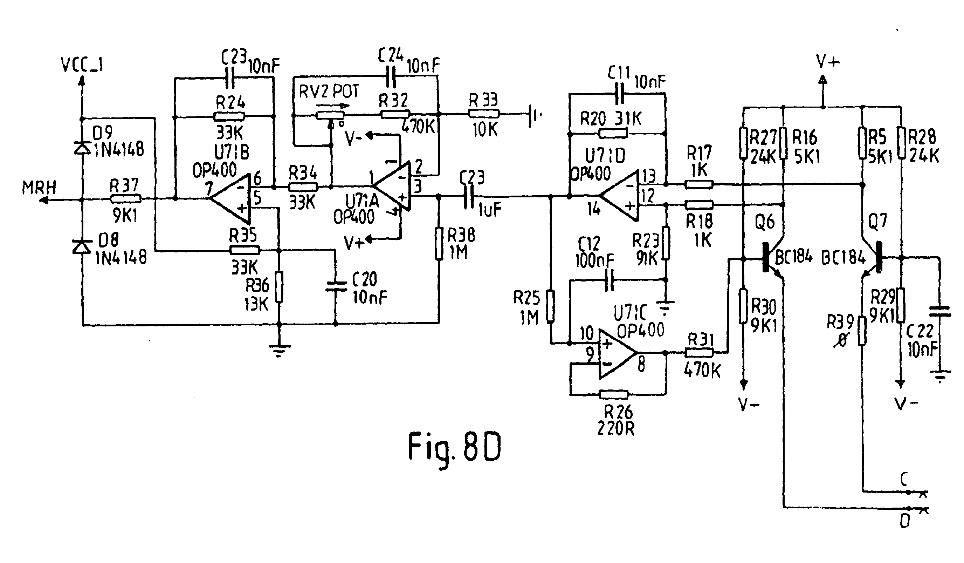

By comparing the measured length for a known number of complete patterns of encoded segments, it is possible to determine whether a thread has become stretched or damaged. The number of patterns is determined by counting the number of start codes detected. Typically length is measured between start codes. The complete circuit is shown in Figures 8A to 8D which is designed to operate as follows:

### Detector and Head Amplifier

Six active magneto restrictive (MR) heads in series, and six dummy MR heads in series, form the emitter loads of a "long tailed pair" bridge amplifier, Q6 and Q7. The outputs of this amplifier are differentially amplified by U7:D and U7:A before being passed through a level shifter U7:B where the bipolar signal is shifted by +2.5 volts. Diodes D8 and D9 clip the shifted signal at zero and +5 volts. A small amount of dc negative feedback is applied to the bridge amplifier via U7:C and R31. This prevents the bridge going off balance due to long term effects such as differential temperature change and component ageing. The amplifier is supplied with filtered ±12v via U6 which itself is supplied with +5 volts.

### Processing Circuitry

An S87C552 microcontroller U1, forms the heart of this section. An integrated ADC accepts and digitises the MR-Head Amplifier output, and a software programme loaded into U1, allows the microcontroller to identify peaks in this digitised signal. The positions of the peaks are used, in conjunction with a timebase, to compute the intermittent magnetic code value and determine if the thread has become stretched.

The timebase is generated by a shaft encoder coupled to the wheel axle in the housing so that as the latter is pushed forward pulses are generated in response to the rotation of the roller, at a selected rate of ether 10 pulses per mm or 20 pulses per mm. The pulse rate is selected by J9. The pulses serve as interrupts to the microcontroller U1, to which they are supplied via U8:A.

A clock identified as TIME 1 is a self-contained, self-powered, real time clock which is set by the microcontroller U1 via U3:A and read via U3:B.

Data relating to readings taken are stored (and retrieved) in the memory device U4. A serial data transfer protocol is used to access and read (store) this device.

Data may be downloaded from or uploaded to a separate computer such as a PC. This is accomplished through a serial data-transfer interface device U2 which is controlled by the microcontroller U1. The serial transfer mode of operation is entered by connecting an appropriate data cable between a serial port associated with J2, and the external computer.

The remaining devices connected to the microcontroller U1 are: DOL input switches SW2 - used to select software variables; an LCD, (not shown on the diagram) connected to J8; bicolour LED's D1 and D2 driven by U3; a buzzer, (not shown on diagram but connected to J4) .

### Power Switching

The primary power supply for the device is a 9v battery connected to J5. Operation of switch SW1 causes Q1 to turn on through a pulse developed by the differentiating network, C9/R14. This connects 9v, through the latching relay RL1, to the regulator device U5 which supplies VCC to the microcontroller U1. Power to the MR-Head Amplifier (VCC_1) is routed via latched relay RL2 switched by Q4 controlled by U1. After the measurement period, power is removed from the MR-Head amplifier and supplied to the LED's D1 and D2 (VCC_2), in order to conserve power.

At the end of an indication period, the power supply is disconnected entirely through the microcontroller unlatching relay RL1 via Q2. The collector of transistor Q5 provides an input to the microcontroller which signals either momentary or prolonged depression of the operating switch SW1.

## Claims

1. A reader for checking magnetically encoded security thread incorporated or to be incorporated into sheet material comprising a housing (1,2) which includes a magnetic reading head (13), a rotary member which is rotatable by engagement either with a surface of the thread or of sheet material containing the thread to be checked or of a surface adjacent thereto, whereby the security thread passes the reading head with relative longitudinal movement and causes first electrical signals to be generated by the reading head, and an encoder coupled to the rotary member, for providing second electrical signals indicating units of the relative movement between the housing and the surface, in synchronism with the first electrical signals from the reading head, wherein the housing is portable and is adapted for manual movement over the thread or the surface of the sheet material to effect the said relative movement.

2. A reader as claimed in claim 1, further comprising circuit means responsive to the first electrical signals from the magnetic reading head (13) to decode same and provide signals indicative of the magnetic pattern detected by the magnetic reading head.

3. A reader as claimed in claim 2, further comprising data storage means and comparison means, whereby decoded signals from the decoder can be compared with signals obtained from the storage means, for generating an output signal indicative of the results of the comparison.

4. A reader as claimed in any one of claims 1 to 3, wherein the magnetic reading head (13) comprises a magneto-resistive transducer and wherein a permanent magnet (12) magnetises magnetic segments along the length of the thread to render them readable by the magneto-resistive transducer.

5. A reader as claimed in any one of claims 1 to 4, wherein the housing includes an alignment device such as an index line on a transparent plate (4) which is adapted to be disposed close to the thread when the housing is positioned thereover for movement relative thereto, the index line serving to indicate the line of movement which the housing needs to follow for the reader to follow, and to remain in alignment with the thread.

6. A reader as claimed in any one of claims 1 to 5, wherein the rotary member is a roller or wheel (6) or a pair of wheels mounted on an axle (5) for rotating a disc (11) carried thereon which cooperates with a stationary sensor (10) to form a shaft encoder.

7. A reader as claimed in claim 6 wherein the disc (11) and wheel (6) are mounted on the same shaft as the rotary member or are driven by a gear train or drive band.

8. A reader as claimed in claim 6 or claim 7 wherein the wheel (6) is formed with a peripheral groove in which is fitted a compressible elastomeric tyre (7) to resist lateral movement, thereby assisting in keeping the reader in alignment with the security thread.

9. A reader as claimed in any one of claims 6 to 8, which further comprises first signal processing circuit means responsive to signals from the shaft encoder (10, 11) to generate electrical signals indicative of the relative movement between the reader and the thread or the sheet material containing the thread.

10. A reader as claimed in claim 9 comprising second circuit means responsive to the signals from the magnetic reading head, to allow the length of each detected magnetic segment in the thread, to be determined.

11. A reader as claimed in any one of claims 1 to 10, further comprising a battery (18).

12. A reader as claimed in claim 11, where the battery is rechargeable.

13. A reader as claimed in any one of claims 1 to 12, further comprising an LCD display (16) mounted so as to be visible through a window in the housing and third circuit means comprising an LCD driver for producing in the LCD, alphanumeric characters indicative of the length of a detected thread segment.

14. A reader as claimed in any one of claims 1 to 13 , which includes one or more LED's, and one or more LED drivers, and further circuit means adapted to cause the LED's to illuminate depending on the results of a comparison of a detected thread segment length with stored data.

15. A reader as claimed in any one of claims 1 to 14, further comprising an ADC to convert analogue signals from the reading head into digital signals, a memory in which to store a signal comparison algorithm, a further memory (23) in which to store digital data relating to lengths and spacings of a known pattern of magnetic thread segments, means for delivering digital signals derived from relative movement between the thread and the reader, to a microprocessor operating in accordance with the said comparison algorithm to compare the stored digital data with the digital signals arising from the said relative movement and relating to the lengths of, and spacings between, the detected thread segments, to produce an output signal indicative of the result of the comparison.

16. A reader as claimed in any one of claims 6 to 15, wherein the shaft encoder (10, 11) is adapted to deliver pulses indicative of rotational movement of the rotary member.

17. A reader as claimed in claim 16, wherein the rotational movement is proportional to the linear movement of the device along the thread or sheet material containing the thread, whereby the rotation can be equated to the length of thread inspected.

18. A reader as claimed in claim 16 or claim 17, wherein each short length of magnetic material making up the thread is constructed to comprise a whole number multiple of unit lengths long, and the length of each gap between two elements of magnetic material is constructed likewise to be a whole number multiple of the same said unit length.

19. A reader as claimed in claim 18, wherein the decoding of the magnetic elements and gaps comprises allocating a number of units of length to each detected magnetic element or gap, which is a whole number equal to or greater than 1.

20. A reader as claimed in claim 19, wherein timing pulses are generated by the relative movement at a rate of N pulses per unit length along the thread and each magnetic segment is represented by a burst of M timing pulses, where M = N x L and where L = the number of unit lengths making up the segment.

21. A reader as claimed in any one of claims 15 to 20, wherein the microprocessor is adapted to determine from the signals available the overall length of a length of thread inspected, and to determine from the digital signals the number of unit lengths making up the scanned thread length so as to be able to compute a mean value for the unit length of the detected thread.

22. A reader as claimed in claim 21, wherein the mean unit of length as computed from the scanned length is compared with stored data relating to the true unit length for the thread, to determine if the scanned thread has suffered stretch or is otherwise not within the specification for the thread.

23. A method of checking a magnetically encoded security thread before or after it is embedded in sheet material such as paper, comprising the steps of providing a reader including a portable housing (1, 2) with a magnetic reading head (13) and a rotary member (6) coupled to an encoder (10), manually moving the housing longitudinally either over a surface of the thread or of sheet material containing the thread to be checked or of a surface adjacent thereto, with the rotary member in engagement therewith, generating a first electrical signal in the reading head (13) as magnetic regions of the thread move past the reading head, and generating a second electrical signal in the encoder (10) in synchronism with the first signal to indicate units of relative movement between the housing and the surface.

24. A method as claimed in claim 23 in which the sheet material comprises a security document such as a bank note having embedded therein the security thread, and in which the reader is moved in such a way that the thread is traversed along its length dimension.

## Patentansprüche

1. Ein Lesegerät zum Prüfen eines in blattförmigern Material eingeschlossenen oder einzuschließenden, magnetisch codierten Sicherheitsfadens mit einem Gehäuse (1, 2), enthaltend einen magnetischen Lesekopf (13), ein drehbares Glied, das durch Anlage entweder an der Oberfläche des Fadens oder des den zu überprüfenden Faden enthaltenden blattförmigen Materials oder an einer daneben liegenden Fläche drehbar ist, wodurch der Sicherheitsfaden mit einer relativen Längsbewegung am Lesekopf vorbeiläuft und durch diesen zu generierende erste elektrische Signale auslöst, und einen an das drehbare Glied angeschlossenen Decodierer zum Erzeugen von die Einheiten der Relativbewegung zwischen dem Gehäuse und der Oberfläche anzeigenden zweiten elektrischen Signalen, synchron mit den vom Lesekopf kommenden ersten elektrischen Signalen, wobei das Gehäuse tragbar und für eine manuelle Bewegung über dem Faden oder der Oberfläche des blattförmigen Materials zum Bewirken dieser Relativbewegung geeignet ist.

2. Ein Lesegerät wie in Anspruch 1 beansprucht, weiter mit Schaltungsmitteln zum Ansprechen auf die vom magnetischen Lesekopf (13) stammenden ersten elektrischen Signale zu deren Decodierung und zum Ausbilden von Signalen, die das von dem magnetischen Lesekopf detektierte magnetische Muster anzeigen.

3. Ein Lesegerät wie in Anspruch 2 beansprucht, weiter mit Datenspeicher- und Vergleichsmitteln, wodurch zum Erzeugen eines die Ergebnisse des Vergleichs anzeigenden Ausgangssignals vom Decoder decodierte Signale mit von den Speichermitteln erhaltenen Signalen verglichen werden können.

4. Ein Lesegerät wie in irgendeinem der Ansprüche 1 bis 3 beansprucht, wobei der magnetische Lesekopf (13) einen magnetoresistiven Wandler enthält und ein Permanentmagnet (12) entlang der Länge des Fadens magnetische Segmente magnetisiert, um sie für den magnetoresistiven Wandler lesbar zu machen.

5. Ein Lesegerät wie in irgendeinem der Ansprüche 1 bis 4 beansprucht, wobei das Gehäuse eine Ausrichtvorrichtung wie eine Indexlinie auf einer transparenten Platte (4) aufweist, die bei Lage des Gehäuses über dem Faden zwecks Relativbewegung gegenüber diesem dicht am Faden angeordnet werden kann und die Indexlinie zur Anzeige der Bewegungslinie dient, der das Gehäuse folgen muß, damit das Lesegerät folgt, und um in Ausrichtung mit dem Faden zu bleiben.

6. Ein Lesegerät wie in irgendeinem der Ansprüche 1 bis 5 beansprucht, wobei das drehbare Glied eine Walze oder ein Rad (6) oder ein auf einer Achse (5) befestigtes Räderpaar ist zum Drehen einer auf der Achse (5) getragenen Scheibe (11), die zum Ausbilden eines Wellencodierers mit einem ortsfesten Sensor (10) zusammenarbeitet.

7. Ein Lesegerät wie in Anspruch 6 beansprucht, wobei die Scheibe (11) und das Rad (6) auf der gleichen Welle wie das drehbare Glied befestigt sind oder von einem Getriebezug oder einem Antriebsband angetrieben werden.

8. Ein Lesegerät wie in Anspruch 6 oder Anspruch 7 beansprucht, wobei das Rad (6) mit einer Umfangsnut ausgebildet ist, in die ein zusammendrückbarer elastomerer Reifen (7) eingepaßt ist, um einer Seitenbewegung zu widerstehen und um damit ein Halten des Lesegerätes in Ausrichtung mit dem Sicherheitsfaden zu unterstützen.

9. Ein Lesegerät wie in irgendeinem der Ansprüche 6 bis 8 beansprucht, das zum Erzeugen von die Relativbewegung zwischen dem Lesegerät und dem Faden oder dem den Faden enthaltenden Blattmaterial anzeigenden elektrischen Signalen auf Signale vom Wellencodierer (10, 11) ansprechende Schaltungsmittel zum Verarbeiten der ersten Signale aufweist.

10. Ein Lesegerät wie in Anspruch 9 beansprucht, mit auf Signale vom magnetischen Lesekopf ansprechenden zweiten Schaltungsmitteln zum Ermöglichen eines Bestimmens der Länge jedes in dem Faden detektierten magnetischen Segmentes.

11. Ein Lesegerät wie in irgendeinem der Ansprüche 1 bis 10 beansprucht, weiter mit einer Batterie (18).

12. Ein Lesegerät wie in Anspruch 11 beansprucht, wobei die Batterie aufladbar ist.

13. Ein Lesegerät wie in irgendeinem der Ansprüche 1 bis 12 beansprucht, weiter mit einer Flüssigkristallanzeige (16), die so befestigt ist, daß sie durch ein Fenster im Gehäuse sichtbar ist, und mit dritten Schaltungsmitteln mit einer Flüssigkristallansteuerung zum Erzeugen von die Länge eines detektierten Fadensegments in der Flüssigkristallanzeige anzeigenden alphanumerischen Zeichen.

14. Ein Lesegerät wie in irgendeinem der Ansprüche 1 bis 13 beansprucht, das ein oder mehrere Leuchtdioden und ein oder mehrere Leuchtdiodenansteuerungen und weitere Schaltungsmittel enthält, die abhängig von den Ergebnissen eines Vergleichs einer detektierten Fadensegmentlänge mit gespeicherten Daten die Leuchtdioden zum Leuchten bringt.

15. Ein Lesegerät wie in irgendeinem der Ansprüche 1 bis 14 beansprucht, weiter mit einem Analog/Digitalwandler zum Umwandeln der Analogsignale vom Lesekopf in digitale Signale, mit einem Speicher, in dem ein Signalvergleichsalgorithmus gespeichert wird, und mit einem weiteren Speicher (23), in dem die sich auf die Längen und Abstände eines bekannten Musters der magnetischen Fadensegmente beziehenden digitalen Daten gespeichert werden, und mit Mitteln zum Weiterleiten der aus der Relativbewegung zwischen dem Faden und dem Lesegerät abgeleiteten digitalen Signale an einen nach Maßgabe des Vergleichsalgorithmus arbeitenden Mikroprozessor zum Vergleichen der gespeicherten digitalen Daten mit den digitalen Signalen, die sich aus der Relativbewegung ergeben und die sich auf die Längen der und die Abstände zwischen den detektierten Fadensegmenten beziehen, zum Erzeugen eines das Ergebnis des Vergleichs anzeigenden Ausgangssignals.

16. Ein Lesegerät wie in irgendeinem der Ansprüche 6 bis 15 beansprucht, wobei der Wellencodierer (10, 11) zum Erzeugen von die Drehbewegung des drehbaren Gliedes anzeigenden Impulsen geeignet ist.

17. Ein Lesegerät wie in Anspruch 16 beansprucht, wobei die Drehbewegung der Linearbewegung der Vorrichtung entlang dem Faden oder dem den Faden enthaltenden Blattmaterial proportional ist, so daß die Drehung der Länge des beobachteten Fadens gleichgesetzt werden kann.

18. Ein Lesegerät wie in Anspruch 16 oder Anspruch 17 beansprucht, wobei jede kurze Länge des den Faden ausmachenden magnetischen Materials so aufgebaut ist, daß sie ein ganzzahliges Vielfaches einer Einheitslänge umfaßt, und die Länge jedes Spalts zwischen zwei Elementen des magnetischen Materials gleichermaßen so aufgebaut ist, daß sie in gleicher Weise ein ganzzahliges Vielfaches der gleichen Einheitslänge ausmacht.

19. Ein Lesegerät wie in Anspruch 18 beansprucht, wobei die Decodierung der magnetischen Elemente und Spalte das Zuordnen einer Zahl der Einheitslänge zu jedem detektierten magnetischen Element oder Spalt, der eine ganze Zahl gleich oder größer als 1 ist, umfaßt.

20. Ein Lesegerät wie in Anspruch 19 beansprucht, wobei Taktimpulse durch die Relativbewegung mit einer Impulsrate von N Impulsen pro Einheitslänge entlang dem Faden erzeugt werden und jedes magnetische Segment durch einen Ausstoß von M Taktimpulsen dargestellt wird, wobei M = N x L und L = Anzahl der das Segment ausmachenden Einheitslängen ist.

21. Ein Lesegerät wie in irgendeinem der Ansprüche 15 bis 20 beansprucht, wobei der Mikroprozessor geeignet ist, aus den verfügbaren Signalen die Gesamtlänge eines Teilstückes des untersuchten Fadens und aus den digitalen Signalen die Zahl der Einheitslängen zu bestimmen, die die abgetastete Fadenlänge ausmachen, um damit einen Mittelwert für die Einheitslänge des detektierten Fadens zu errechnen.

22. Ein Lesegerät wie in Anspruch 21 beansprucht, wobei die mittlere Einheit einer Länge, wie sie aus der abgetasteten Länge berechnet wird, mit den sich auf die wahre Einheitslänge für den Faden beziehenden gespeicherten Daten verglichen wird, um zu bestimmen, ob der abgetastete Faden eine Dehnung erlitten hat oder ob er sich auf andere Weise nicht innerhalb der Spezifikation für den Faden befindet.

23. Ein Verfahren zum Prüfen eines magnetisch codierten Sicherheitsfadens vor oder nach dessen Einbetten in Blattmaterial, wie zum Beispiel Papier, **gekennzeichnet durch** die Stufen des Ausbildens eines Lesegerätes mit einem tragbaren Gehäuse (1, 2) mit einem magnetischen Lesekopf (13) und einem an einen Codierer (10) angeschlossenen drehbaren Glied (6), mit manuellem Verschieben des Gehäuses in Längsrichtung entweder über eine Oberfläche des Fadens oder eines den zu überprüfenden Faden enthaltenden Blattmaterials oder über eine dazu benachbarte Fläche bei Anlage des drehbaren Gliedes an dieser mit Erzeugen eines ersten elektrischen Signals in dem Lesekopf (13), während magnetische Gebiete des Fadens sich an dem Lesekopf vorbeibewegen, und Erzeugen eines zweiten elektrischen Signals in dem Codierer (10) synchron mit dem ersten Signal zum Anzeigen der Einheiten der Relativbewegung zwischen dem Gehäuse und der Oberfläche.

24. Ein Verfahren wie in Anspruch 23 beansprucht, bei dem das Blattmaterial ein Sicherheitsdokument, wie zum Beispiel eine Banknote mit einem in ihr eingebetteten Sicherheitsfaden, ist und wobei das Lesegerät in solcher Weise bewegt wird, daß der Faden entlang seiner Längenabmessung durchkreuzt wird.

## Revendications

1. Lecteur pour le contrôle d'un fil de sécurité codé magnétiquement incorporé ou à incorporer dans un matériau en feuille comprenant un boîtier (1, 2) comportant une tête de lecture magnétique (13), un élément rotatif qui tourne lorsqu'il est mis en contact avec une surface du fil, ou du matériau en feuille contenant le fil à contrôler, ou avec une surface adjacente à celui-ci, le fil de sécurité passant devant la tête de lecture dans un mouvement relatif longitudinal et entraînant la génération de premiers signaux électriques par la tête de lecture, et un codeur couplé à l'élément rotatif pour fournir des seconds signaux électriques indiquant des unités du mouvement relatif entre le boîtier et la surface, synchronisés avec les premiers signaux électriques de la tête de lecture, le boîtier étant portatif et adapté au déplacement manuel au-dessus du fil ou de la surface du matériau en feuille pour effectuer ledit mouvement relatif.

2. Lecteur selon la revendication 1, comportant en outre des circuits répondant aux premiers signaux électriques de la tête de lecture magnétique (13), pour décoder ceux-ci et foumir des signaux indiquant le schéma magnétique détecté par la tête de lecture magnétique.

3. Lecteur selon la revendication 2, comportant en outre des moyens de mémorisation de données et des moyens de comparaison, par lesquels les signaux décodés venant du décodeur peuvent être comparés avec des signaux obtenus des moyens de mémorisation, pour générer un signal de sortie indiquant les résultats de la comparaison.

4. Lecteur selon l'une des revendications 1 à 3, dans lequel la tête de lecture magnétique (13) comprend un transducteur magnéto-résistif, et dans lequel un aimant permanent (12) magnétise des segments magnétiques sur la longueur du fil pour les rendre lisibles par le transducteur magnéto-résistif.

5. Lecteur selon l'une des revendications 1 à 4, dans lequel le boîtier comporte un dispositif d'alignement tel qu'une ligne repère sur une plaque transparente (4) destinée à être placée à proximité du fil lorsque le boîtier est positionné au-dessus de celui-ci pour un mouvement relatif à celui-ci, la ligne repère servant à indiquer la ligne de mouvement que le boîtier doit suivre afin que le lecteur suive le fil et reste aligné sur celui-ci.

6. Lecteur selon l'une des revendications 1 à 5, dans lequel l'élément tournant est un rouleau ou un galet (6) ou une paire de galets montés sur un axe (5) pour faire tourner un disque (11) monté sur celui-ci, qui coopère avec un capteur fixe (10) pour former un codeur à arbre.

7. Lecteur selon la revendication 6, dans lequel le disque (11) et le galet (6) sont montés sur le même arbre que l'élément rotatif, ou sont entraînés par un train d'engrenages ou par une courroie d'entraînement.

8. Lecteur selon la revendication 6 ou 7, dans lequel le galet (6) est réalisé avec une gorge périphérique, dans laquelle est disposé un bandage compressible élastomère (7) afin de résister au mouvement latéral, aidant ainsi à maintenir le lecteur aligné sur le fil de sécurité.

9. Lecteur selon l'une des revendications 6 à 8, qui comprend en outre un circuit de retraitement des premiers signaux en réponse aux signaux du codeur à arbre (10, 11) pour générer des signaux électriques indiquant le mouvement relatif entre le lecteur et le fil ou le matériau en feuille contenant le fil.

10. Lecteur selon la revendication 9, qui comprend en outre un deuxième circuit répondant aux signaux de la tête de lecture magnétique, pour permettre la détermination de la longueur de chaque segment magnétique détecté dans le fil.

11. Lecteur selon l'une des revendications 1 à 10, qui comprend en outre une batterie (18).

12. Lecteur selon la revendication 11, dans lequel la batterie est rechargeable.

13. Lecteur selon l'une des revendications 1 à 12, qui comprend en outre un affichage à cristaux liquides (16) monté de sorte à être visible à travers une fenêtre dans le boîtier et un troisième circuit comprenant un étage de commande pour l'affichage à cristaux liquides, pour produire sur l'affichage à cristaux liquides des caractères alphanumériques indiquant la longueur d'un segment de fil détecté.

14. Lecteur selon l'une des revendications 1 à 13, qui comprend une ou plusieurs DEL et un ou plusieurs étages de commande de DEL, ainsi qu'un circuit approprié pour entraîner l'allumage des DEL en fonction des résultats d'une comparaison d'une longueur de segment de fil détectée avec des données mémorisées.

15. Lecteur selon l'une des revendications 1 à 14, qui comprend un convertisseur analogique-digital qui convertit des signaux analogiques de la tête de lecture en signaux digitaux, une mémoire permettant d'enregistrer un algorithme de comparaison de signaux, une autre mémoire (23) permettant d'enregistrer des données digitales se rapportant aux longueurs et espacements d'un schéma connu de segments de fil magnétique, des moyens pour fournir des signaux digitaux dérivés du mouvement relatif entre le fil et le lecteur à un microprocesseur fonctionnant conformément audit algorithme de comparaison pour comparer les données digitales mémorisées avec les signaux digitaux provenant dudit mouvement relatif et se rapportant aux longueurs des segments de fil détectés et aux espaces entre ceux-ci, afin de produire un signal de sortie indiquant le résultat de la comparaison.

16. Lecteur selon l'une des revendications 6 à 15, dans lequel le codeur à arbre (10, 11) est adapté à la fourniture d'impulsions indiquant le mouvement en rotation de l'élément rotatif.

17. Lecteur selon la revendication 16, dans lequel le mouvement en rotation est proportionnel au mouvement linéaire de l'appareil le long du fil ou du matériau en feuille contenant le fil, la rotation pouvant être mise en relation avec la longueur de fil contrôlée.

18. Lecteur selon la revendication 16 ou 17, dans lequel chaque courte longueur de matériau magnétique constituant le fil est conçue de sorte à avoir pour longueur un nombre entier, multiple d'unités de longueur, et, de même, la longueur de chaque espace entre deux éléments de matériau magnétique est conçue de sorte à avoir pour longueur un nombre entier, multiple de ladite même unité de longueur.

19. Lecteur selon la revendication 18, dans lequel le décodage des éléments magnétiques et des espaces comprend l'affectation d'un nombre d'unités de longueur à chaque élément magnétique ou espace détecté, ce nombre étant un nombre entier égal ou supérieur à 1.

20. Lecteur selon la revendication 19, dans lequel des impulsions de synchronisation sont générées par le mouvement relatif à une fréquence de N impulsions par unité de longueur sur le fil et chaque segment magnétique est représenté par une salve de M impulsions de synchronisation, où M = N x L et où L = le nombre d'unités de longueur formant le segment.

21. Lecteur selon l'une des revendications 15 à 20, dans lequel le microprocesseur est configuré pour déterminer, à partir des signaux disponibles, la longueur totale d'une longueur de fil contrôlée, et pour déterminer sur la base des signaux digitaux le nombre d'unités de longueur formant la longueur de fil lue, afin d'être en mesure de calculer une valeur moyenne de l'unité de longueur du fil détecté.

22. Lecteur selon la revendication 21, dans lequel l'unité de longueur moyenne calculée sur la base de la longueur lue est comparée avec des données mémorisées se rapportant à la vraie unité de longueur du fil, afin de déterminer si le fil lu a été soumis à étirement ou s'il est d'une autre manière hors des spécifications du fil.

23. Méthode de contrôle d'un fil de sécurité codé magnétiquement avant ou après qu'il ne soit noyé dans un matériau en feuille comme du papier, comprenant les étapes de la fourniture d'un lecteur comportant un boîtier portatif (1, 2) avec une tête de lecture magnétique (13) et un élément rotatif (6) couplé à un codeur (10), le déplacement manuel longitudinal du boîtier sur une surface du fil ou sur du matériau en feuille contenant le fil à contrôler ou sur une surface adjacente à celui-ci, l'élément rotatif étant en contact avec celui-ci, la génération d'un premier signal électrique dans la tête de lecture (13) lorsque des zones magnétiques du fil passent sous la tête de lecture, et la génération d'un deuxième signal électrique dans le codeur (10) en synchronisme avec le premier signal, afin d'indiquer des unités de mouvement relatif entre le boîtier et la surface.

24. Méthode selon la revendication 23, dans laquelle le matériau en feuilles comprend un document sécurisé comme un billet de banque dans lequel le fil de sécurité est noyé, et dans laquelle le lecteur est déplacé de telle sorte que le fil est parcouru dans le sens de sa longueur.
